# EUROPÄISCHE PATENTSCHRIFT

(11) **EP 0 904 673 B1**
(45) Veröffentlichungstag und Bekanntmachung des Hinweises auf die Patenterteilung: **14.03.2001**
(21) Anmeldenummer: 97931616.3
(22) Anmeldetag: 11.06.1997
(51) Int. Cl.: H05B 37/02

(54) **AUTOMATISCHE LEUCHTENSTEUERUNGSVORRICHTUNG**
AUTOMATIC LIGHT CONTROLLER
REGULATEUR AUTOMATIQUE D'APPAREILS D'ECLAIRAGE

(30) Priorität: 12.06.1996 DE 19623481
(43) Veröffentlichungstag der Anmeldung: 31.03.1999
(73) Patentinhaber: Infineon Technologies AG, 81669 München (DE)
(72) Erfinder: LOHNINGER, Gerhard, D-81549 München (DE); SCHÖPF, Klaus-Jürgen, D-85737 Ismaning (DE)
(86) Internationale Anmeldenummer: DE9701200
(87) Internationale Veröffentlichungsnummer: WO9748255

(56) Entgegenhaltungen:
- EP-A- 0 440 862
- EP-A- 0 608 552
- WO-A-92/10074
- DE-A- 4 419 019
- US-A- 4 943 712
- US-A- 4 982 176
- US-A- 5 015 994
- US-A- 5 021 795

## Beschreibung

Die Erfindung bezieht sich auf eine automatische Leuchtensteuerungsvorrichtung gemäß dem Oberbegriff des Anspruches 1.

Eine Beleuchtungssteuerung mit Mikrowellensensoren ist in G. Lohninger, Funkschau 12/1992, S. 82-86 und Funkschau 13/1992, S. 82-88 beschrieben. Diese enthält zwei extern angeordnete Radarmodule, sogenannte Outdoor-Units, die über Kabel mit einer Indoor-Unit (Steuergerät) verbunden sind, welche eine Steuerplatine und ein Netzteil aufweist. Diese bekannte Beleuchtungssteuerung weist eine große Anzahl von elektronischen Bauelementen auf, ist sehr kompliziert aufgebaut und hat einen sehr großen Platzbedarf. Darüberhinaus hat sie den Nachteil, daß bei kurz eingestellter Einschaltzeit der Leuchten und bei andauernder Bewegung vor dem Sensor das Licht permanent ein- und ausgeschaltet wird.

Aus der WO-A-9 210 074 ist eine Leuchtensteuerungvorrichtung mit einem Dopplerradarmodulbekannt, in der automatisch von einer ersten Empfindlichkeit, die einer kurzen Reichweite entspricht, auf eine zweite Empfindlichkeit, die Detektion im ganzen Raum ermöglicht, übergegangenwird.

In der US-A-4 982 176 ist eine Leuchtensteuerungsvorrichtung mit Bewegungsdetektion gezeigt. Ein Infrarotsignal wird nach entsprechender Verstärkung einem ersten und einem zweiten monostabilen Multivibrator zugeführt, die einen positiven bzw. negativen Impuls feststellen. Nur wenn beide Multivibratoren aktiviert sind, wird ein Impuls weitergeleitet damit ein störungsfreier Betriebsichergestellt wird. Anstelle von Infrarotsignalen können auch Mikrowellen zur Bewegungsdetektion verwendet werden.

Der Erfindung liegt die Aufgabe zugrunde, eine besonders störungsfreie Leuchtensteuerungsvorrichtung der eingangs genannten Art mit möglichst geringem Schaltungsaufwand zu entwikkeln. Sie soll insbesondere auf einfache Weise vollständig in eine in der Haustechnik herkömmlich verwendeten Unterputzdose integrierbar sein.

Diese Aufgabe wird durch eine automatische Leuchtensteuerungsvorrichtung mit den Merkmalen des Anspruches 1 gelöst.

Vorteilhafte Weiterbildungen der Erfindung sind Gegenstand der Unteransprüche 2 bis 8.

Störungen, wie beispielsweise ein Einschalten einer Leuchte aufgrund von Spannungsschwankungen im Netz, die die Schaltungsanordnung irrtümlicherweise als Dopplerradarmodulsignale interpretieren könnte, werden dadurch unterbunden. Das Zeitfilter ist derart ausgelegt, daß die Schalteinheit nicht sofort beim ersten Signal des Dopplerradarmoduls, sondern erst bei einem nachfolgenden Signal, zum Beispiel beim zweiten Signal, betätigt wird.

Hierbei sind mit Dopplerradarmodulsignale diejenigen elektrischen Signale gemeint, welche das Dopplerradarmodul aussendet, wenn innerhalb seiner Sende- und Empfangsreichweite Bewegungsvorgänge stattfinden.

Eine einmal eingestellte Reichweite, innerhalb der die erfindungsgemäße Leuchtensteuerungsvorrichtung auf Bewegungen reagiert ist vorteilhafterweise unabhängig von der Umgebungstemperatur der Leuchtensteuerungsvorrichtung, da ein Dopplerradarmodul Bewegungen an sich detektiert.

Desweiteren kann sie auf einfache Weise in eine herkömmlich in der Haustechnik verwendete Unterputzdose (z. B. Durchmesser ca. 55 mm) oder in eine andere Installationsdose eingebaut werden. Das Dopplerradarmodul inklusive der Schalteinheit, der Schaltungsanordnung und dem Netzgerät läßt sich nämlich auf einfache Weise äußerst platzsparend realisieren. Außerdem ist vorteilhafterweise mit einem Dopplerradarmodul ein Senden und Empfangen von Mikrowellenstrahlung durch Abdeckungen wie z. B. Kunststoffdeckel, Putz oder Mauerwerk möglich. Sie kann somit vorteilhafterweise überall dort, wo ein Lichtschalter in einer Installationsdose vorhanden ist, anstelle dieses Lichtschalters in die Installationsdose eingesetzt werden.

Bei einer bevorzugten Ausführungsform der Erfindung weist die Schaltungsanordnung zum Auswerten von Dopplerradarmodulsignalen einen Vorverstärker zur Verstärkung von von dem Dopplerradarmodul erzeugten und ausgesandten elektrischen Signalen (Dopplerradarmodulsignale) und eine Kippschaltung, bevorzugt einen temperaturkompensierten Schmitt-Trigger mit mitlaufender Schwelle, zum Umwandeln der verstärkten (analogen) Dopplerradarmodulsignale in digitale Signale auf. Letzteres gewährleistet vorteilhafterweise eine weitestgehende Unabhängigkeit der Sensorreichweite von der Umgebungstemperatur.

Bei einer weiteren bevorzugten Ausführungsform ist ein Strahlungssensor zum Detektieren der Helligkeit in der Umgebung der Leuchtensteuerungsvorrichtung und eine dem Strahlungssensor zugeordnete Strahlungssensorschaltungseinheit vorgesehen. Der Vorteil dieser Ausführungsform besteht insbesondere darin, daß dadurch die Leuchtensteuerungsvorrichtung selbstständig zwischen hell und dunkel unterscheiden und folglich beispielsweise bei Tageslicht das Dopplerradarmodul deaktivieren kann.

Eine weitere vorteilhafte Weiterbildung der erfindungsgemäßen automatischen Leuchtensteuerungsvorrichtung weist zusätzlich eine Abschalteinheit zum Stromlosschalten des Dopplerradarmoduls auf, die an einen Steuerausgang eines programmierbaren Timers angeschlossen ist. Mittels des programmierbaren Timers kann vorteilhafterweise das Dopplerradarmodul bei Helligkeit (z. B. Tageslicht) in der Umgebung der Leuchtensteuerungsvorrichtung nach einer vorbestimmten Zeitdauer über die Abschalteinheit stromlos geschaltet werden. Dadurch läßt sich der Stromverbrauch der Leuchtensteuerungsvorrichtung auf ein Minimum senken.

Eine weiterhin bevorzugte Ausführungsform der erfindungsgemäßen automatischen Leuchtensteuerungsvorrichtung weist zusätzlich einen manuell oder ferngesteuert betätigbaren, in einer Steuerleitung der Schalteinheit vorgesehenen Schalter auf, mittels dem sie wahlweise in folgende drei Betriebszustände schaltbar ist:
a) Normalbetrieb, bei dem das Dopplerradarmodul auf Bewegungsvorgänge in seiner Umgebung reagiert und bei Dunkelheit in der Umgebung der Leuchtensteuerungsvorrichtung ein Einschalten einer oder mehrerer an die Schalteinheit angeschlossenen Leuchte/n bewirkt;
b) Leerlauf, bei dem auch bei Bewegungsvorgängen und Dunkelheit in der Umgebung des Dopplerradarmoduls die Leuchte/n nicht eingeschaltet wird/werden;
c) Dauerlichtbetrieb, bei dem die Leuchte/n unabhängig von Bewegungsvorgängen und Helligkeit in der Umgebung des Dopplerradarmoduls eingeschaltet ist/sind.

Der Vorteil dieser Ausführungsform besteht darin, daß die Leuchtensteuerungsvorrichtung sowohl als normaler Lichtschalter (dauernd "aus" oder dauernd "ein") als auch als automatischer Lichtschalter verwendbar ist.

Bei einer weiteren vorteilhaften Ausführungsform der erfindungsgemäßen automatischen Leuchtensteuerungsvorrichtung ist das Dopplerradarmodul vollständig in Mikrostreifenleitungstechnik aufgebaut und mit einer Flächenantenne versehen, derart, daß es eine Mikrowellenstrahlung mit einer Frequenz zwischen 1 und 5 GHz, insbesondere 2,45 GHz, aussendet. Die Vorteile dieser Ausführungsform bestehen darin, daß das Dopplerradarmodul besonders platzsparend aufgebaut und daß die weltweit fernmeldetechnisch für Dopplerradarmodule zugelassene Frequenz von ca. 2,45 GHz genutzt werden kann.

Weitere Merkmale, Vorteile und Zweckmäßigkeiten der Erfindung ergeben sich aus der nachfolgenden Beschreibung eines Ausführungsbeispiels in Verbindung mit den Figuren 1 bis 5. Es zeigen
Figur 1 ein Prinzipschaltbild für eine erfindungsgemäße Leuchtensteuerungsvorrichtung,
Figur 2 eine Seitenansicht einer fertig aufgebauten erfindungsgemäße Leuchtensteuerungsvorrichtung,
Figur 3 eine Draufsicht auf die Leuchtensteuerungsvorrichtung von Figur 2,
Figuren 4a und 4b Impulsdiagramme der Schaltungsanordnung und Figur 5 eine schematische Darstellung eines temperaturkompensierten Schmitt-Triggers mit mitlaufender Schwelle.

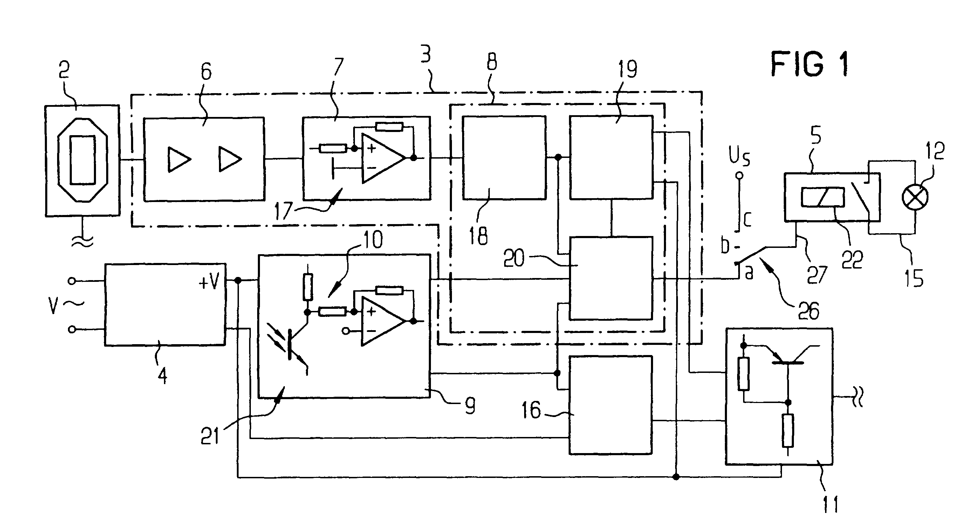

Bei der in Figur 1 gezeigten erfindungsgemäßen Leuchtensteuerungsvorrichtung ist ein Dopplerradarmodul 2 mit einem Vorverstärker 6 und mit einer Abschalteinheit 11 verbunden. Der Vorverstärker 6, beispielsweise ein zweistufiger Verstärker mit einer Bandbreite von ca. 25 Hz und einem Verstärkungsfaktor von 1000, dient zur Verstärkung von von dem Dopplerradarmodul 2 erzeugten Dopplerradarmodulsignalen. Hierzu kann beispielsweise ein Doppeloperationsverstärker verwendet sein.

Der Vorverstärker 6 ist mit einer Kippschaltung 7, die beispielsweise einen temperaturkompensierten Schmitt-Trigger 17 mit mitlaufender Schwelle aufweist, verbunden. Die Hysterese der Kippschaltung bestimmt die Reichweite des Dopplerradarmoduls, d. h. bei welcher Entfernung eines sich bewegenden Objektes vom Dopplerradarmodul 2 eine Schalteinheit 5 betätigt und somit eine Leuchte 12 eingeschaltet wird. Die Schalteinheit 5 weist dazu beispielsweise ein Relais 22 auf.

An die Kippschaltung 7 ist ein Zeitfilter 8 gekoppelt, das aus einem Monoflop 18 (z. B. mit t = 0,1 Sekunden), aus einem ersten retriggerbaren Timer 19 (z. B. mit t = 2 Sekunden) und einem zweiten retriggerbaren Timer 20 aufgebaut ist. Mittels dieses Zeitfilters 8 wird eine variabel definierte Zeitspanne vorgegeben, nach deren Ablauf eine Aktivierung des zweiten retriggerbaren Timers 20 möglich ist. Damit wird die Störanfälligkeit - Einschalten der Leuchte aufgrund von Störsignalen - der Schaltungsanordnung reduziert.

Der Vorverstärker 6, die Kippschaltung 7 und das Zeitfilter 8 bilden eine Schaltungsanordnung 3 zum Auswerten von Dopplerradarmodulsignalen und zum Erzeugen von Signalen zum Steuern der Schalteinheit 5.

Desweiteren weist die Leuchtensteuerungsvorrichtung nach Figur 1 zusätzlich einen Strahlungssensor 9, beispielsweise einen Fototransistor 21 mit einer Strahlungssensorschaltungseinheit 10 (beispielsweise ein Schmitt-Trigger) auf, der mit dem zweiten retriggerbaren Timer 20 des Zeitfilters 8, mit dem programmierbaren Timer 16 und mit dem Ausgang V+ des Netzgerätes 4 verbunden ist.

Mit einem mit dem Netzgerät 4, mit der Abschalteinheit 11, mit dem Strahlungssensor 9 und mit dem zweiten retriggerbaren Timer 20 verbundenen programmierbaren Timer 16 wird eine beliebige Zeitdauer eingestellt, nach der bei Helligkeit (z. B. bei Tageslicht) in der Umgebung der Leuchtensteuerungsvorrichtung ein Abschalten des Dopplerradarmoduls 2 vermittels der Abschalteinheit 11 bewirkt wird. Dadurch verringert sich die Stromaufnahme der Leuchtensteuerungsvorrichtung.

Die Funktionsweise des Zeitfilters ist beispielsweise folgende:
Das Monoflop 18 wandelt einen Impuls von der Kippschaltung (7) in einen Monopuls mit definierter Zeitdauer, beispielsweise 0,1 Sekunden, um. Dieser Monopuls speist den ersten retriggerbaren Timer 19, dessen Zeitbasis fix eingestellt ist (z. B. 2 Sekunden) und den zweiten retriggerbaren Timer 20, dessen Zeitbasis variabel definiert ist (z. B. von 2 Sekunden bis ca. 4 Minuten). Das Ausgangssignal des ersten retriggerbaren Timers 19 bestimmt die Zeitdauer, in der der zweite retriggerbare Timer 20 getriggert werden kann.

So erzeugt z.B. ein Impuls am Eingang des Monoflops 18 einen Monopuls der Länge von 0,1 Sekunden. Die negative Flanke des Monopulses startet den ersten retriggerbaren Timer 19 und ein Ausgang des ersten retriggerbaren Timers 19 geht auf Low-Pegel. Nur wenn beim zweiten retriggerbaren Timer 20 an einem ersten Eingang ein Low-Pegel anliegt, kann dieser durch einen weiteren Monopuls des Monoflops 18 getriggert werden. Kommt also kein weiteres Dopplermodulsignal und somit auch kein weiterer Monopuls vom Monoflop 18, so wird die Schalteinheit 5 nicht veranlaßt, den Leuchtenstromkreis 15 zu schließen. Sollte ein zweites Dopplermodulsignal und damit ein zweiter Monopuls in einem vorgegebenen Zeitraum von beispielsweise 2 Sekunden von dem Monoflop 18 ausgesandt werden, so wird die Schalteinheit 5 beispielsweise ein Relais, vermittels des zweiten retriggerbaren Timers 20 in einen Ein-Zustand geschaltet.

Der Strahlungssensor 9 sorgt für die Abhängigkeit der Leuchtensteuerungsvorrichtung von der Helligkeit in ihrer Umgebung. Dadurch wird ermöglicht, daß bei ausreichend heller Umgebung (ggf. einstellbarer Wert), wie z. B. bei Tageslicht, die Schalteinheit 5 den Leuchtenstromkreis 15 nicht schließt und somit auch bei Bewegung innerhalb der Reichweite des Dopplerradarmoduls 2 die Leuchte 12 nicht eingeschaltet wird.

Weiterhin ist bei diesem Ausführungsbeispiel vorgesehen, daß bei ausreichender Helligkeit in der Umgebung der Leuchtensteuerungsvorrichtung das Dopplermodul 2 nach einer durch den programmierbaren Timer 16 einstellbaren Zeitdauer abgeschaltet wird, wodurch sich die Stromaufnahme des Gesamtsystems beispielsweise auf 2 mA reduziert. Dazu wird vom Strahlungssensor die Information "ausreichende Helligkeit" an den programmierbaren Timer 16 gegeben, der dann nach der vorgegebe-nen Zeitdauer, z. B. 10 Minuten, das Dopplerradarmodul 2 vermittels der Abschalteinheit 11 stromlos schaltet.

Mittels eines in einer Steuerleitung 27 der Schalteinheit 5 vorgesehenen manuell oder ferngesteuert betätigbaren Schalters 26 ist die Leuchtensteuerungsvorrichtung wahlweise in folgende drei Betriebszustände a,b,c schaltbar:
a) Normalbetrieb; über die Steuerleitung 27 ist die Schalteinheit 5 mit der Schaltungsanordnung 3 verbunden. Bei Bewegungsvorgängen innerhalb der Reichweite des Dopplerradarmoduls 2 und bei Dunkelheit in der Umgebung der Leuchtensteuerungsvorrichtung wird die Leuchte 12 eingeschaltet;
b) Leerlauf; die Steuerleitung 27 ist offen. Auch im Falle von Bewegungsvorgängen innerhalb der Reichweite des Dopplerradarmoduls 2 und bei Dunkelheit in der Umgebung der Leuchtensteuerungsvorrichtung wird die Leuchte 12 nicht eingeschaltet;
c) Dauerlichtbetrieb; über die Steuerleitung 27 ist die Schalteinheit 5 dauernd mit einem Versorgungspotential Uₛ verbunden ist, das ein Einschalten der Schalteinheit 5 bewirkt. Die Leuchte 12 ist somit unabhängig von Bewegungsvorgängen innerhalb der Reichweite des Dopplerradarmoduls 2 und der Helligkeit in der Umgebung der Leuchtensteuerungsvorrichtung eingeschaltet.

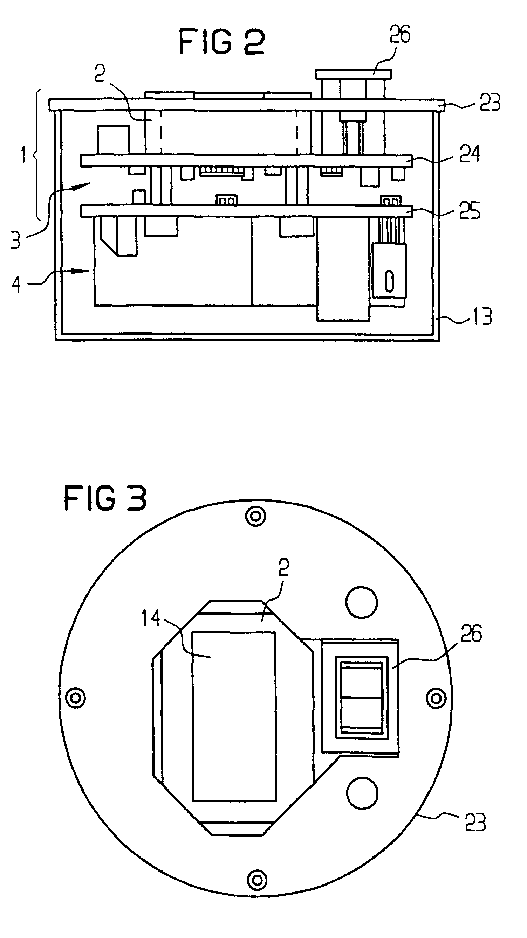

Bei der in den Figuren 2 und 3 schematisch dargestellten Anordnung der einzelnen Schaltungskomponenten der Leuchtensteuerungsvorrichtung ist ein Dopplerradarmodul 2 mit Flächenantenne 14 und einer Abstrahlfrequenz von beispielsweise 2.45 Ghz auf einer ersten Leiterplatte 23, die Schalteinheit 5, die Schaltungsanordnung 3 mit dem Vorverstärker 6, der Kippschaltung 7, dem Zeitfilter 8, ggf. der programmierbare Timer 16, der Strahlungssensor 9 mit Strahlungssensorschaltungseinheit 10, die Abschalteinheit 11, und ein manuell zu betätigender Schalter 26 auf einer zweiten Leiterplatte 24 und das Netzgerät 4 (ggf. abgeschirmt) auf einer dritten Leiterplatte 25 angeordnet. Bei dieser Mehrlagen-Leiterplattenanordnung 1 sind die Leiterplatten 23, 24, 25 in geringstmöglichem Abstand voneinander, übereinander angeordnet. Der maximale Durchmesser der ersten und zweiten Leiterplatte 23,24 beträgt beispielsweise 54 mm, so daß die gesamte Leuchtensteuerungsvorrichtung z. B. vollständig in eine Standard-Unterputzdose 13 mit einem Innendurchmesser von 55 mm eingebaut werden kann.

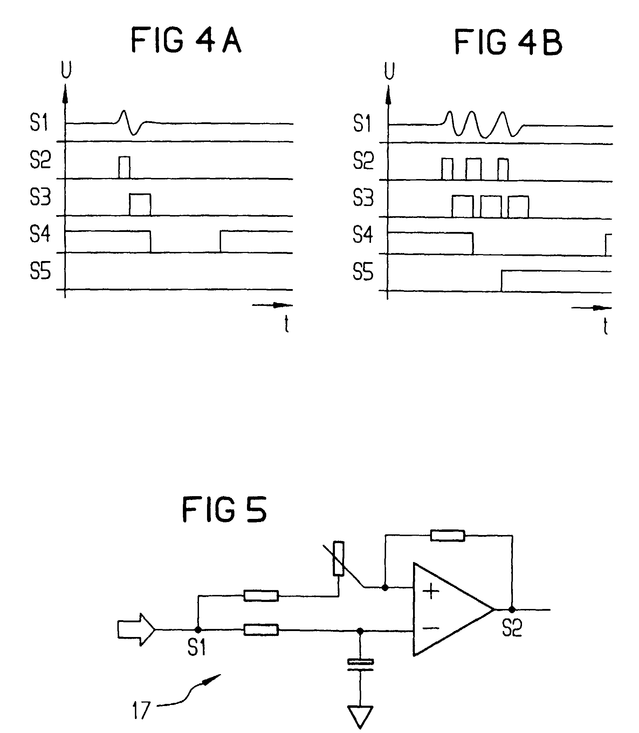

Die Figuren 4a und 4b zeigen zwei Impulsdiagramme (Spannung U in Abhängigkeit von der Zeit t) der Schaltungsanordnung im Falle eines Störimpulses bzw. im Falle einer Bewegung innerhalb der Sende- und Empfangsreichweite des Dopplerradarmoduls 2. Hierbei ist S1 das Signal, welches von der Kippschaltung 7, dem bevorzugten temperaturkompensierten Schmitt-Trigger mit mitlaufender Schwelle (Figur 5), empfangen wird, S2 das von der Kippschaltung 7 an das Monoflop 18, S3 das vom Monoflop 18 an den ersten 19 und den zweiten retriggerbaren Timer 20, S4 das vom ersten 19 an den zweiten retriggerbaren Timer und S5 das vom zweiten retriggerbaren Timer 20 an die Schalteinheit 5 gesendete Signal. Im Falle eines einzelnen Störimpulses bleibt S5 auf "Low" (Figur 4a), erst wenn innerhalb der Zeitspanne, in der S4 auf "Low" ist, ein zweites Signal S1 ankommt, geht S5 auf "High" und betätigt die Schalteinheit 5, die den Leuchtenstromkreis 15 schließt.

## Patentansprüche

1. Automatische Leuchtensteuerungsvorrichtung, bei der ein Dopplerradarmodul (2), eine Schalteinheit (5) zum Ein- und Ausschalten eines Leuchtenstromkreises (15) eine Schaltungsanordnung (3) zum Auswerten von Dopplerradarmodulsignalen und zum Erzeugen von Signalen zum Steuern der Schalteinheit (5) und ein Netzgerät (4) zur Stromversorgung des Dopplerradarmoduls (2) und der Schaltungsanordnung (3) vorgesehen sind,
**dadurch gekennzeichnet**, dass
die Schaltungsanordnung (3) ein Zeitfilter (8) zur Reduktion der Störanfälligkeit der Leuchtensteuerungsvorrichtung aufweist, das ein in Abhängigkeit von einem empfangenen Dopplerradarmodulsignal steuerbares Monoflop (18) sowie, einen an das Monoflop (18) gekoppelten ersten retriggerbaren Timer (19) und einen an das Monoflop (18) und den ersten retriggerbaren Timer (19) gekoppelten zweiten retriggerbaren Timer (20) aufweist, wobei mittels dem Zeitfilter (8) ein Schalten der Schalteinheit (5) durchführbar ist, in dem eine Flanke der vom Monoflop (18) abgegebenen Pulse (S3) den ersten retriggerbaren Timer (19) veranlaßt, einen vorgegebenen Pegel (S4) auszugeben und dass der zweite retriggerbare Timer (20) nur dann durch einen vom Monoflop (18) abgegebenen weiteren Puls (S3) getriggert wird, während der erste retriggerbare Timer (19) den vorgegebenen Pegel (S4) dem zweiten retriggerbaren Timer (20) zuführt.

2. Automatische Leuchtensteuerungsvorrichtung nach Anspruch 1, **dadurch gekennzeichent,** dass die Schaltungsanordnung (3) einen temperaturkompensierten Schmitt-Trigger (7) zur Umwandlung von Dopplerradarmodulsignalen in digitale Signale aufweist, der an das Zeitfilter (8) gekoppelt ist.

3. Automatische Leuchtensteuerungsvorrichtung nach Anspruch 1 oder 2, **dadurch gekennzeichent,** dass ein Strahlungssensor (9) zum Detektieren der Helligkeit in der Umgebung der Leuchtsteuerungsvorrichtung und eine dem Strahlungssensor (9) zugeordnete Strahlungssensorschaltungseinheit (10) vorgesehen ist.

4. Automatische Leuchtensteuerungsvorrichtung nach Anspruch 3, **dadurch gekennzeichent,** dass eine an das Zeitfilter (8) gekoppelte Abschalteinheit (11) zum Stromlosschalten des Dopplerradarmoduls (2) vorgesehen ist, die an einen Steuerausgang eines an den Strahlungssensor (9) und an das Zeitfilter (8) gekoppelten programmierbaren Timers (16) angeschlossen ist.

5. Automatische Leuchtensteuerungsvorrichtung nach Anspruch 4, **dadurch gekennzeichent,** dass in einer Steuerleitung (27) der Schalteinheit (5) ein manuell oder ferngesteuert betätigbarer Schalter (26) vorgesehen ist, mit dem wahlweise folgende drei Betriebszustände einstellbar sind:
a) Normalbetrieb, bei dem die Steuerleitung (27) der Schalteinheit (5) mit der Schaltungsanordnung (3) verbunden ist, so daß das Dopplerradarmodul (2) auf Bewegungsvorgänge innerhalb der Reichweite des Dopplerradarmoduls (2) reagiert und bei Dunkelheit in der Umgebung der Leuchtensteuerungsvorrichtung ein Einschalten einer oder mehrerer an die Schalteinheit (5) angeschlossener Leuchten (12) bewirkt;
b) Leerlauf, bei dem die Steuerleitung (27) der Schalteinheit (5) offen ist, so daß auch bei Bewegungsvorgängen innerhalb der Reichweite des Dopplerradarmoduls (2) und bei Dunkelheit in der Umgebung der Leuchtensteuerungsvorrichtung die Leuchte/n (12) nicht eingeschaltet wird/werden;
c) Dauerlichtbetrieb, bei dem die Steuerleitung (27) der Schalteinheit (5) dauernd mit einem Potential verbunden ist, das ein Einschalten der Schalteinheit (5) bewirkt, so daß die Leuchte/n (12) unabhängig von Bewegungsvorgängen innerhalb der Reichweite des Dopplerradarmoduls (2) und der Helligkeit in der Umgebung der Leuchtensteuerungsvorrichtung eingeschaltet ist/sind.

6. Automatische Leuchtensteuerungsvorrichtung nach einem der Ansprüche 1 bis 5, **dadurch gekennzeichent**, dass das Dopplerradarmodul (2) in Mikrostreifenleitungstechnik aufgebaut ist, eine Flächenantenne (14) aufweist und eine Mikrowellenstrahlung mit einer Frequenz zwischen 1 und 5 GHz aussendet.

7. Automatische Leuchtensteuerungsvorrichtung nach einem der Ansprüche 1 bis 6, **dadurch gekennzeichent,** dass alle Bauelemente auf einer einzigen Mehrlagen-Leiterplattenanordnung (1) angeordnet sind.

8. Automatische Leuchtensteuerungsvorrichtung nach Anspruch 7, **dadurch gekennzeichent,** dass die MehrlagenLeiterplattenanordnung (1) derart aufgebaut ist, daß sie vollständig in einer Unterputzdose (13) mit einem Innendurchmesser von ca. 55 mm einbaubar ist.

## Claims

1. Automatic lamp control device provided with a Doppler radar module (2), a switching unit (5) for switching a lamp circuit (15) on and off, a circuit arrangement (3) for evaluating Doppler radar module signals and for producing signals for controlling the switching unit (5), and a power supply unit (4) for supplying current to the Doppler radar module (2) and to the circuit arrangement (3), characterized in that the circuit arrangement (3) has a time-domain filter (8) for reducing the susceptibility of the lamp control device to faults, the time-domain filter (8) having a monostable multivibrator (18), which can be controlled on the basis of a received Doppler radar module signal, and also a first retriggerable timer (19) coupled to the monostable multivibrator (18), and a second retriggerable timer (20) coupled to the monostable multivibrator (18) and to the first retriggerable timer (19), the time-domain filter (8) being capable of being used to switch the switching unit (5) by virtue of an edge of the pulses (S3) output by the monostable multivibrator (18) prompting the first retriggerable timer (19) to output a prescribed level (S4) and the second retriggerable timer (20) being triggered by a further pulse (S3) output by the monostable vibrator (18) only while the first retriggerable timer (19) is supplying the prescribed level (S4) to the second retriggerable timer (20).

2. Automatic lamp control device according to Claim 1, characterized in that the circuit arrangement (3) has a temperature-compensated Schmitt trigger (7) for converting Doppler radar module signals into digital signals, said Schmitt trigger (7) being coupled to the time-domain filter (8).

3. Automatic lamp control device according to Claim 1 or 2, characterized in that a radiation sensor (9) for detecting the brightness in the vicinity of the lamp control device, and a radiation sensor switching unit (10) associated with the radiation sensor (9) are provided.

4. Automatic lamp control device according to Claim 3, characterized in that a turn-off unit (11) coupled to the time-domain filter (8) is provided for switching off the Doppler radar module (2), said turn-off unit (11) being connected to a control output of a programmable timer (16) coupled to the radiation sensor (9) and to the time-domain filter (8).

5. Automatic lamp control device according to Claim 4, characterized in that a control line (27) of the switching unit (5) is provided with a switch (26) which can be actuated manually or by remote control and can be used to set the following three operating states alternatively:
a) normal operation, in which the control line (27) of the switching unit (5) is connected to the circuit arrangement (3), so that the Doppler radar module (2) reacts to movements within the range of the Doppler radar module (2) and switches on one or more lamps (12) connected to the switching unit (5) when it is dark in the vicinity of the lamp control device;
b) standby, in which the control line (27) of the switching unit (5) is open, so that the lamp(s) (12) is/are not switched on even when there are movements within the range of the Doppler radar module (2) and it is dark in the vicinity of the lamp control device;
c) continuous light operation, in which the control line (27) of the switching unit (5) is continuously connected to a potential which causes the switching unit (5) to switch to on, so that the lamp(s) (12) is/are switched on irrespective of movements within the range of the Doppler radar module (2) and the brightness in the vicinity of the lamp control device.

6. Automatic lamp control device according to one of Claims 1 to 5, characterized in that the Doppler radar module (2) is designed using microstripline technology, has a surface antenna (14) and transmits microwave radiation at a frequency of between 1 and 5 GHz.

7. Automatic lamp control device according to one of Claims 1 to 6, characterized in that all the components are arranged on a single multilayer printed circuit board arrangement (1).

8. Automatic lamp control device according to Claim 7, characterized in that the multilayer printed circuit board arrangement (1) is designed such that it can be installed completely in a flush-mounted box (13) having an internal diameter of approx. 55 mm.

## Revendications

1. Dispositif de commande d'éclairage automatique, dans lequel sont prévus un module (2) à radar Doppler, une unité (5) de commutation pour brancher et débrancher un circuit (15) de courant d'éclairage, un montage (3) pour exploiter des signaux du module à radar Doppler et pour produire des signaux pour commander l'unité (5) de commutation et un appareil (4) d'alimentation pour alimenter en courant le module (2) à radar Doppler et le montage (3), caractérisé en ce que le montage (3) comporte, pour réduire la sensibilité aux parasites du dispositif de commande d'éclairage, un filtre (8) temporel qui comporte une bascule (18) monostable pouvant être commandée par un signal reçu du module à radar Doppler, ainsi qu'une première horloge (19) redéclenchable, couplée à la bascule (18) monostable, et une deuxième horloge (20) redéclenchable, couplée à la bascule (18) monostable et à la première horloge (19) redéclenchable, un branchement de l'unité (5) de commutation pouvant être réalisé au moyen du filtre (8) temporel du fait qu'un front de l'impulsion (S3) fournie par la bascule (18) monostable fait que la première horloge (19) redéclenchable sort un premier niveau (S4) prescrit et que la deuxième horloge (20) redéclenchable n'est déclenchée qu'alors par une impulsion (S3) supplémentaire fournie par la bascule (18) monostable, tandis que la première horloge (19) redéclenchable envoie le niveau (S4) prescrit à la deuxième horloge (20) redéclenchable.

2. Dispositif de commande d'éclairage automatique suivant la revendication 1, caractérisé en ce que le montage (3) comporte un Trigger (7) de Schmitt compensé en température pour convertir des signaux de module à radar Doppler en signaux numériques, le Trigger de Schmitt étant relié au filtre (8) temporel.

3. Dispositif de commande d'éclairage automatique suivant la revendication 1 ou 2, caractérisé en ce qu'il est prévu un détecteur (9) de rayonnement pour détecter la clarté aux environs du dispositif de commande d'éclairage et une unité (10) de circuit de détection de rayonnement associée au détecteur (9) de rayonnement.

4. Dispositif de commande d'éclairage automatique suivant la revendication 3, caractérisé en ce qu'il est prévu une unité (11) de déconnexion pour brancher le module (2) à radar Doppler à l'état sans courant, qui est couplée au filtre (8) temporel et qui est raccordée à une sortie de commande d'une horloge (16) programmable couplée au détecteur (9) de rayonnement et au filtre (8) temporel.

5. Dispositif de commande d'éclairage automatique suivant la revendication 4, caractérisé en ce qu'il est prévu dans une ligne (27) de commande de l'unité (5) de commutation un interrupteur (26) qui peut être actionné manuellement ou par commande à distance et par lequel on peut régler au choix les trois états de fonctionnement suivants :
a) Fonctionnement normal, dans lequel la ligne (27) de commande de l'unité (5) de commutation est reliée au montage (3), si bien que le module (2) à radar Doppler réagit à des déplacements à l'intérieur de la portée du module (2) à radar Doppler et, lorsqu'il fait sombre aux environs du dispositif de commande d'éclairage, provoque un allumage d'un ou plusieurs appareil(s) (12) d'éclairage raccordé(s) à l'unité (5) de commutation ;
b) Fonctionnement à vide, dans lequel la ligne (27) de commande de l'unité (5) de commutation est ouverte, si bien que même lorsqu'il se produit des déplacements à l'intérieur de la portée du module (2) à radar Doppler et qu'il fait sombre aux environs du dispositif de commande d'éclairage, l'éclairage ou les éclairages (12) ne sont pas allumés ;
c) Fonctionnement en lumière ininterrompue, dans lequel la ligne (27) de commande de l'unité (5) de commutation est reliée en permanence à un potentiel qui provoque un branchement de l'unité (5) de commutation, si bien que l'éclairage ou les éclairages (12) sont branchés indépendamment de déplacements à l'intérieur de la portée du module (2) à radar Doppler et de la clarté aux environs du dispositif de commande d'éclairage.

6. Dispositif de commande d'éclairage automatique suivant l'une des revendications 1 à 5, caractérisé en ce que le module (2) à radar Doppler est réalisé en technique des guides d'ondes à rubans, comporte une antenne (14) en nappe et émet un rayonnement hyperfréquence à une fréquence comprise entre 1 et 5 GHz.

7. Dispositif de commande d'éclairage automatique suivant l'une des revendications 1 à 6, caractérisé en ce que tous les composants sont montés sur un seul dispositif (1) de plaquettes à circuit imprimé multicouches.

8. Dispositif de commande d'éclairage automatique suivant la revendication 7, caractérisé en ce que le dispositif (1) de plaquettes à circuit imprimé multicouches est réalisé de manière à pouvoir être installé entièrement dans une boîte (13) de branchement encastrée ayant un diamètre intérieur d'environ 55 mm.
